# EUROPEAN PATENT APPLICATION

(11) **EP 0 537 481 A2**
(43) Date of publication of application: **21.04.1993**
(21) Application number: 92115606.3
(22) Date of filing: 11.09.1992
(51) Int. Cl.: G06F 15/16, H04L 12/40

(54) **Network selection of broadcast messages based on a content code**

(30) Priority: 13.09.1991 JP 234672/91
(71) Applicant: HITACHI, LTD., Chiyoda-ku, Tokyo 101 (JP)
(72) Inventor: Orimo, Masayuki, Kawasaki-shi, Kanagawa (JP); Mori, Kinji, Machida-shi, Tokyo (JP); Hirasawa, Shigeki, Sagamihara-shi, Kanagawa (JP); Fujise, Hiroshi, Yokohama-shi, Kanagawa (JP); Takeuchi, Masayuki, Fujisawa-shi, Kanagawa (JP); Suzuki, Hitoshi, Owariasahi-shi, Aichi (JP)
(74) Representative: Strehl Schübel-Hopf Groening & Partner

(57) **Abstract**

In a distributed processing system using a broadcast communication, a plurality of processors (11...16, 21...26) are connected with a common trnasmission medium (1), in which a message flows with a content code (303). Each of the processors judges whether to receive the message on the basis of the content code of an arbitrary part (6031, 6032) of an area, in which the content code (303) of the message judged is stored.

## Description

### BACKGROUND OF THE INVENTION

The present invention relates to selecting a message to be received by each of a plurality of main processors in a distributed processing system having the main processors connected through a network.

In a distributed processing system having a plurality of main processors, which execute program processing and are connected through a network, there is a method, in which instead of an address indicating a destination, there is a code indicating a data content called "content code" added to a message broadcast to the network. This method is disclosed by U.S. Patent No. 4,366,479, issued December 28, 1982.

Each main processor decides whether to receive a message on the network by comparing the message content code and the registered content code that the main processor has stored. As a result, each main processor can send a message, without knowing what other main processors are in the system, and can receive an arbitrary message not specifically addressed to it from among the messages flowing on the network, thereby to improve the flexibility of the system.

### SUMMARY OF THE PRESENT INVENTION

It is an object of the present invention to analyze and solve problems of the prior art. The aforementioned method of the prior art has not taken into consideration a content code that has areas hierarchically set, and has not considered a content code that is transmitted among multiple kinds of processors. The present invention considers the former case in that whether to receive the content code can be judged merely by judging only a portion of the content code, and the latter case so that the range to apply the content code for transmission can be extended.

The present invention includes the analysis thus far described and has an object to provide an efficient and flexible method for selecting messages, which is so improved over the aforementioned prior art that it can be applied with a content code that has hierarchically set areas and with a content code transmitted among multiple kinds of main processors.

The aforementioned prior art selecting method is accomplished by individual main processors and is accomplished by processors for transmission control added to the individual main processors. When using only the main processors for selecting the content code, the main processors have serious loads. When the content code is selected by the processors for transmission control only, these control processors for transmission control have serious loads. The answer for lightening these loads is given by the present invention.

In a system comprising a plurality of main processors (and perhaps control processors) connected with a common transmission medium carrying a message having a content code, each processor judges whether to receive the message on the basis of the content of an arbitrary part of the content code. For convenience, when referring to a processor that is judging whether to receive a message or otherwise active in the discussion, such processor will be called the self-processor, which may be a control processor or a main processor.

The present invention equips each of the processors composing the aforementioned distributed processing system with:
(1) logic for judging (hardware logic circuit and/or software), by dividing a content code part into a plurality of areas and determining whether the value of a message area is registered with the self-processor consecutively from the leading one of the registered areas; and/or
(2) logic for judging, by dividing a content code part into a plurality of areas and determining whether the value of one area is registered with the self-processor independently of the values of the other areas; and/or
(3) a function to add to a message and send a code indicating the kind of sending processor at the time of sending a message; and/or
(4) a function to convert the form of a content code at a receiving processor on the basis of a code indicating the kind of sending processor at the time of receiving the message; and/or
(5) a simple logic for partially judging a message content code by a processor for transmission control.

Each processor is enabled by the aforementioned features (1) or (2) to discriminate the content code of the message to receive by partially judging the content code so that it can judge the content code efficiently.

Thanks to the aforementioned features (3) and (4), each processor can recognize what kind of processor generated the message and convert the content code in the message into a form that can be recognized by itself when the sending and receiving processors are of different kinds, so that the content code can be communicated among multiple kinds of processors.

Thanks to the aforementioned feature (5), the judging of the content code can be efficiently shared between the control processor for transmission control and the program executing main processor, so that the process of judging the content code can be efficiently accomplished without overloading either processor.

The embodiments of the present invention will be described in detail in the following with reference to the accompanying drawings.

### BRIEF DESCRIPTION OF THE DRAWINGS

Further objects, features and advantages will become more clear from the following detailed description of the drawings, wherein:
Figure 1 is a diagram showing the whole structure of the system according to the present invention;
Figure 2 is a diagram showing the internal structure of the processor of the present invention;
Figure 3 shows the message format of the present invention;
Figure 4 is a flowchart for explaining the sending process of the present invention;
Figure 5A is a flowchart for explaining the receiving process of the present invention;
Figure 5B shows the structure of the content code table of Figure 2;
Figure 6 is a diagram showing the whole structure of the system according to the present invention without the groupings of Fig. 1;
Figure 7 shows the message format according to more general terms than Fig. 3 and the present invention;
Figure 8A shows a content code table structure for the system of Figure 6;
Figure 8B is a diagram for explaining the flow of messages of the present invention;
Figure 9 is a diagram showing the whole structure of the system having the third feature of the preferred embodiment of the present invention;
Figure 10 is a diagram showing the message format according to the third feature of the present invention;
Figure 11 is a flowchart for explaining the third feature of the present invention;
Figure 12 is a diagram showing the structure of an essential portion for explaining a fourth feature of the preferred embodiment of the present invention;
Figure 13 is a flowchart of step 501, Fig. 5A, in greater detail;
Figure 14 is a flowchart of step 501, as a variation of Fig. 13; and
Figure 15 is a flowchart of step 501, as a variation of Figure 14.

### DETAILED DESCRIPTION OF THE INVENTION

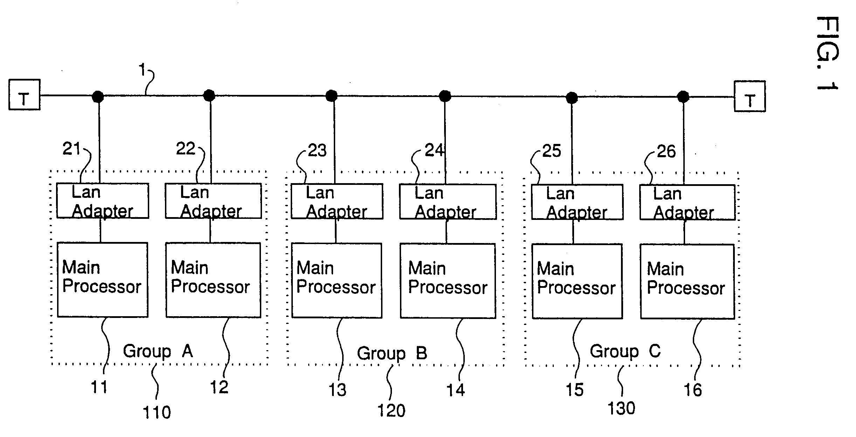

Figure 1 is a diagram showing the overall structure of a system according to the present invention. In this figure, main processors 11 to 16 have internal memories storing data and application programs AP, and the main processors are capable of executing the application programs AP. A bus network 1 connects the individual main processors 11 to 16. LAN adapters 21 to 26 are control processors for controlling the sending/receiving of messages between the main processors and the bus network 1. The main processors 11 to 16 send and receive messages with the bus network 1 via the LAN adapters 21 to 26. Although the LAN adapters perform the interface control with the bus network 1, the individual main processors 11 to 16 may perform the interface control themselves. The bus network 1 has at its ends suitable terminators T.

Preferably, the individual main processors 11-16 are logically grouped. In Figure 1: the main processors 11 and 12 belong to group A (110); the main processors 13 and 14 belong to group B(120); the main processors 15 and 16 belong to group C (130), but any arbitrary grouping can be accomplished. Each of the main processor 11-16 has registered in its memory a group ID (GID) identifying the corresponding group among groups A-C to which it belongs. The main processors 11, 12 belonging to the group A are registered with the group ID, GID=A, the main processors 13, 14 that belong to the group B are registered with the group ID, GID=B, and the main processors 15, 16 belonging to the group C are registered with the group ID, GID=C.

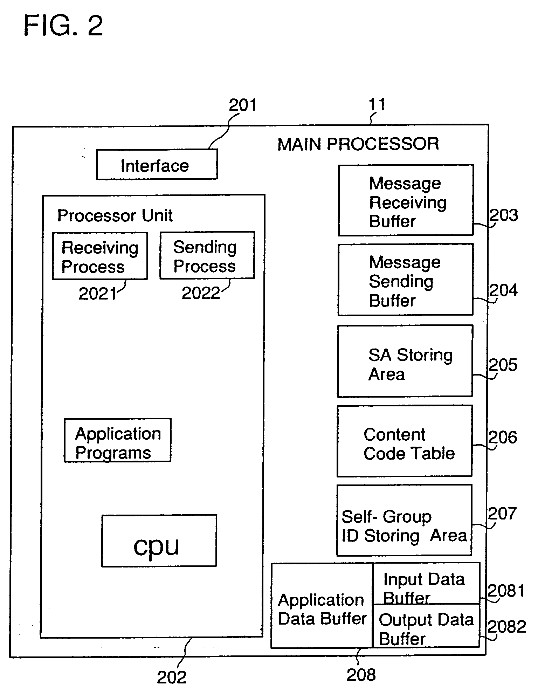

Figure 2 is a diagram showing the internal structure of the main processor 11 shown in Figure 1. The other main processors 12 to 16 have identical structures. An interface 201 controls the data transfer with the LAN adapter 12. A message receiving buffer 203 temporarily stores each of the messages from the bus network 1. Message sending buffer 204 stores a message to be sent to the bus network 1. An SA (self address) storing area 205 stores an address assigned to the self-processor 11. This self-processor address is automatically stored in SA Storing Area 205 from a ROM or disc or the like at the time of starting the processor 11.

A content code table 206 stores one or more content codes related to messages that the self-processor 11 wants to receive. The content code will be described hereinafter. A self-group ID storing area 207 is an area for storing the GID of the group to which the self-processor 11 belongs. The content code table 206 and the self-group ID storing area 207 have their contents stored in a random access, preferably non-volatile, memory medium such as a disk, whose content may be set into faster memory, for example RAM, at the time of starting the processor 11. The content of the aforementioned memory medium can be altered by commands or the like while the processor 11 is running.

An application data buffer 208 interfaces with the application program AP to be executed in the self-processor 11. An input data buffer 2081 stores data selectively received from the message receiving buffer 203 (in buffer 208) which data is necessary for the execution of the application program AP in the self-processor 11. In an output data buffer 2082, each application program AP being executed by the self-processor 11 stores its output data together with the content code indicating the content of the output data.

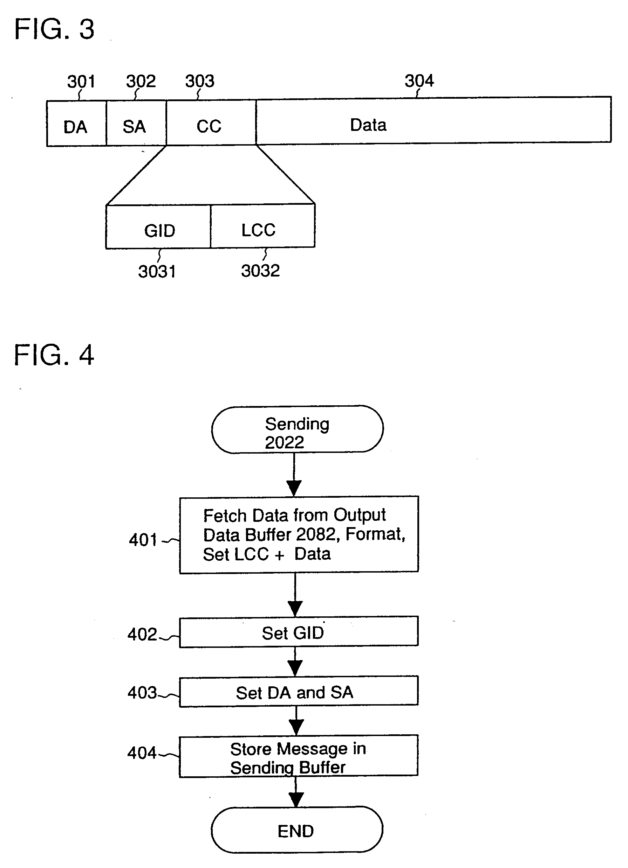

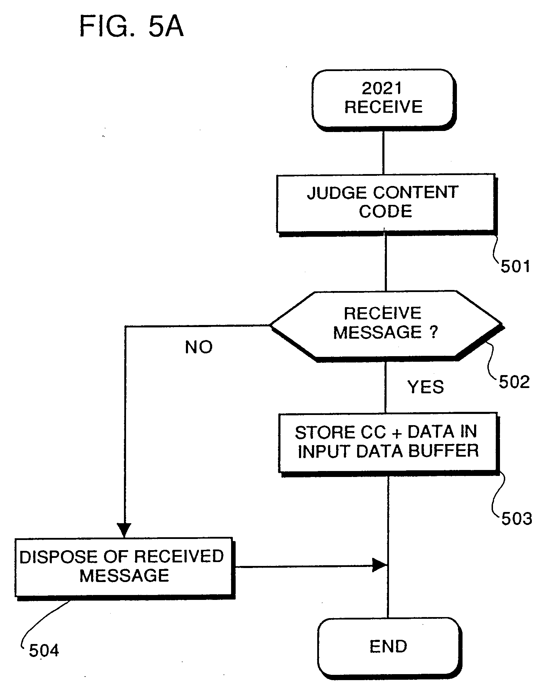

A processor unit 202, having a cpu registers and the like, performs program execution by the processor 11 by using the aforementioned various buffers 203, 204, 208, areas 205, 207 and table 206. A receiving process 2021 (Figure 5A) and a sending process 2022 (Figure 4) are processes in memory for the present invention, as will be described in the following.

Figure 3 shows a format of a message flowing on the bus network 1 shown in Figure 1 and which message is automatically held in message receiving buffer 203 of Figure 2. The control codes or the like necessary for the message transfer are omitted from Figure 3. A DA part 301 is a destination address indicating the destination of a message. The message is broadcast on the bus network 1 in the present invention with the DA part 301 set with an address indicating the broadcast mode usable with the present invention as opposed to a specific destination address used in an address mode that is not applicable to the present invention. An SA part 302 is an area indicating the sender address from SA storing area 205 of a processor 11-16 having produced and sent the message.

A Data part 304 is an area for storing the data to be transmitted by the present message. Moreover, a CC part 303 is set with content code indicating the content of the data stored in the Data part 304. On the basis of this code CC, each processor judges whether to receive the broadcast message flowing on the bus network 1, that is judges whether to transfer the message from the message receiving buffer 203 to the input data buffer 2081. The CC part 303 is composed of a group ID (GID) 3031 and a local content code (LCC) 3032.

The contents of the sending process 2022 and the receiving process 2021 shown in Figure 2 will be descried with reference to Figures 4 and 5A, respectively.

Figure 4 is a flow chart showing the sending process 2022. In the present sending process 2022, the output data of an application program AP stored in the output data buffer 2082 of the application data buffer 208 shown in Figures 1 and 2 is fetched at Step 401 and is formatted as shown in Figure 3 in steps 402 to 403. It is then stored in the sending buffer 204. Specifically, the output data of the application program fetched from the output data buffer 2082 is set in the Data part 304 of the format of Figure 3, and the content code CC indicating the content of the data is set in the LCC part 3032 of the message format of Figure 3 in step 401.

Next, the content of the self-group ID storage area 207 is set at step 402 in the GID part 3031 of the format of Figure 3. The address indicating the broadcast mode is set in the DA part 301 of Figure 3 and the content of the SA storing area 205 is set in the SA part 302 of Figure 3, step 403. After this, the message of Figure 3 is stored at step 404 in the sending buffer 204. The content of the sending buffer is sent out to the bus network 1 via the interface 201 and the LAN adapter 21 as the END of the sending process.

Here, the message thus sent out (broadcast) to the network is received in the message receiving buffer 203 by all the LAN adapters 22-26 (excepting the message producing LAN adapter 21), because the broadcast mode is set in the message destination address DA part.

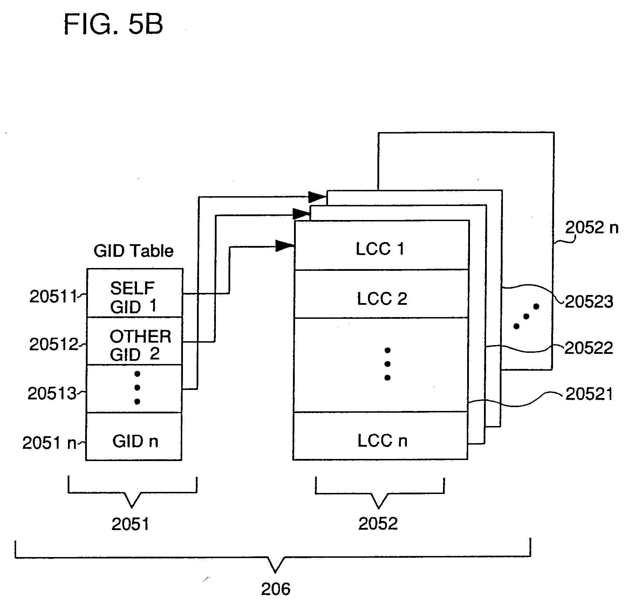

Figures 5A and 5B explain the receiving process 2021 shown in Fig. 2. Figure 5A is a flowchart showing the receiving process 2021. In the receiving process 2021, it is judged at steps 501 and 502 whether the message (Figure 3) stored in the receiving buffer 203 (by examining the content code part CC of Figure 3) is to be received in the input data buffer 2081 of the self-processor (e.g. each of 12-16). In case the judging is that the message is not to be received, the receiving process 2021 is ended by disposing of the message at step 504, e.g., by clearing the message receiving buffer 203. In case the message is to be received, the content of the CC part 303 and the Data part 304 of the message (Figure 3) are stored at step 503 in the input data buffer 2081 of Figure 2 of the application data buffer 208. By using the data in this input data buffer 2081, an application program AP is processed.

Next, the process step 501 of judging the content code CC of the present receiving process 2021 will be described in detail with reference to Figure 5B. Figure 5B is a diagram showing a structure of the content code table 206 shown in Figure 2. The process step 501 of judging the content code CC 303 is accomplished by comparing the contents of the content code table 206 of the self-processor and the CC part 303 of the message in the message receiving buffer 203. The content code table 206 is composed of a GID table 2051 and an LCC table 2052. The GID table has line 20511 to register the self group ID. Other individual group ID's are registered on lines 20512 ... 2051n.

The first line 20511 of the GID table always registers the self group ID, GID 1, of the group to which the self-processor belongs. This is because then the message produced by a processor belonging to the same group as the self-processor will always be received. The LCC table 2052 is a group of subtables to correspond to each line of the GID table 2051. Specifically, an LCC subtable 20521 exists to correspond to the first line 20511 of the GID table; an LC subtable 20522 exists to correspond to the second line 20512 of the GID table; and an LCC subtable 20523 exists to correspond to a third line 20513 of the GID table, etc.

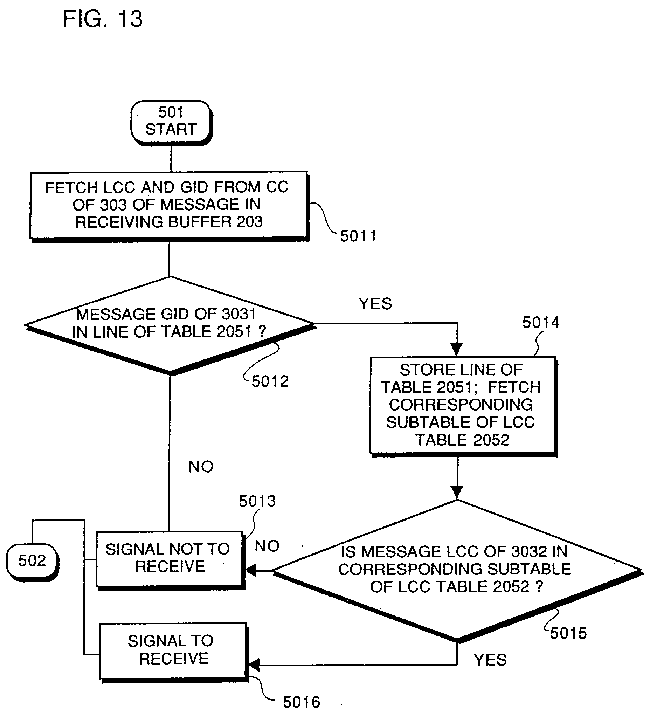

Each LCC subtable, 20521-2052n, is registered with the content codes LCC 1 ... LCCm of the messages produced by the corresponding group registered in the GID table 2051. The subtable from LCC table 2052 that corresponds to the GID of GID table 2051 that matches the GID registered in message area 3031 is fetched by the self-processor. Here, the content codes LCC registered in the LCC subtable are each compared to the code set in the LCC part 3032 in the CC part 303 of the message format shown in Figure 3. By using this content code table 206, the process of judging the content code at step 501 of Figure 5 is accomplished according to the following procedure shown in the flowchart of Figure 13.

The LCC 3032 and GID 3031 of the message, of Figure 3, are fetched from the message receiving buffer 203 by step 5011 of Figure 13. It is judged in step 5012 whether or not the content of the GID part/area 3031 of Figure 3 of the message fetched from the message receiving buffer 203 is registered in the GID table 2051. If NOT, the process 501 of judging the content code is ended by generating a signal not to receive that message in step 5013 plus passing to step 502. If YES, the subsequent step 5014 stores what line of GID table 2051 the registered line is in. Here, it is assumed that the content of the message GID area 3031 is registered on the n-th line 2051n and the corresponding subtable 2052n is fetched from LCC table 2052 in step 5014. It is judged in step 5015 whether the content of the LCC part 3032 of Figure 3 of the message fetched from the receiving buffer 203 is registered (as one of LCC1 ... LCCn) in the LCC subtable 2052n corresponding to the n-th line 2051n of the GID table 2051. If NOT, the process step 501 of judging the content code 303 is ended by generating a signal not to receive that message in step 5013 and processing passes to step 502. If YES, the process step 501 of judging he content code 303 is ended by generating a signal to receive the message in step 5015 and passing the process to step 502.

According to the embodiment thus far described, in the system having its individual processors grouped, as shown in Figure 1, each processor 11-16 prejudges whether to receive the broadcast message of Figure 3 flowing on the bus network 1, by judging (step 5012) the group to which the processor having produced that message belongs, so that the process of judging not to receive the message can be efficiently accomplished. In short, each processor can judge not to receive the message produced from a group having no relation to itself, from only the content of the GID part in that message without examining the LCC part.

According to the method thus far described according to the present embodiment, moreover, the overlap of the content codes among the groups can be tolerated. Therefore, the content codes LCC can be set in the application independently for each of the individual groups. That is two groups can have the same content codes for different purposes without confusion.

According to the method thus far described according to the present invention, the broadcast message produced by a processor belong to another related (i.e., in the GID table 2051) group can be easily fetched from the message received buffer 203 and transferred to input data buffer 2081.

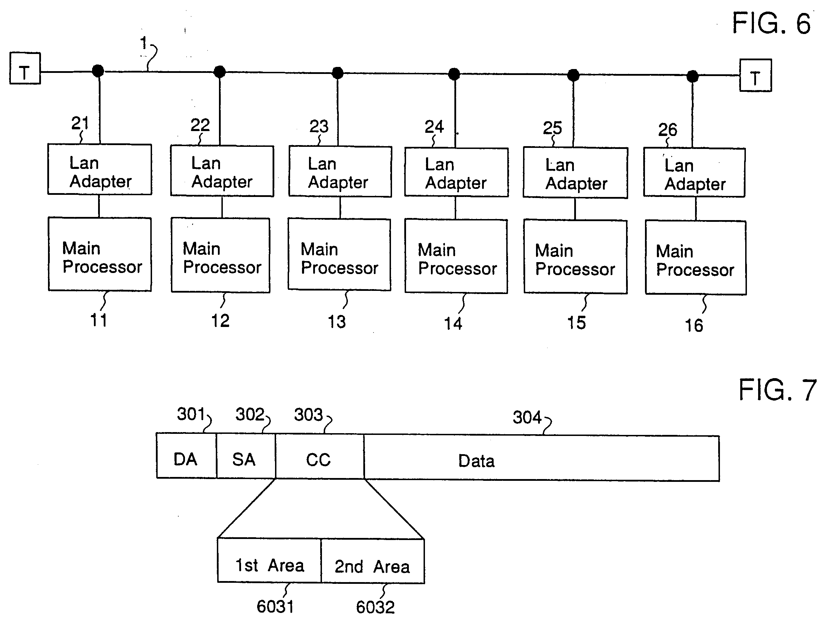

Next, the present invention will be described with reference to Figures 6 and 7. The system structure of Figure 6 is absolutely identical to that shown in Figure 1 except that the individual processors are logically grouped in Figure 1 and not grouped in Figure 6. In other words, Figure 6, relates more generally to the structure, in which the group ID, GID, is not necessarily assigned to each processor 11-16. Moreover, each processor 11-16 of Figure 6 has its internal structure identical to that shown in Figure 2. Despite this fact, however, the self-group ID storing area 207 can be dispensed with, or simply not used when no GID is present or when no GID is set in the message.

Figure 7 shows a format of the broadcast message to flow on the network 1 shown in Figure 6. Here, the contents of the DA part 301, the SA part 302 and the Data part 304 are identical to those shown in Figure 3. A CC part 303 is a content code indicating the content of the data stored in the Data part like, but more generally than the CC part 303 of Figure 3. The content code part 303 is composed of a plurality of areas, at least two. The content code part 303 is composed of a first area 6031 and a second area 6032, but the content code part can be composed of more areas. The content codes to be stored in the individual areas 6031, 6032 will be called the "partial content codes". In Figure 3, the first area 6031 was specific to the GID area 3031 and the second area 6032 was specific to the LCC area 3032.

In the arrangement of processors in Figure 6, the individual processors 11-16 perform the following sending process 2022:
(1) The application program AP executed in each processor 11-16 sets its own output data in data area 304 and the content code corresponding to the output data is set in area 303, for the message in the output data buffer 2082 of Figure 2. At this time, two partial content codes 6031, 6032 are set as the content code 303. These partial content codes 6031, 6032 are set in one of the following three manners:
   (a) Both of the two partial content codes 6031, 6032 are set, e.g., as in the Figure 3 as GID and LCC;
   (b) Only the first partial content code 6031 is set; and
   (c) Only the second partial content code 6032 is set.
(2) The processor unit 202 shown in Figure 2 produces a message having the format shown in Figure 7, on the basis of the output data of the application program AP that is stored in the output data buffer 2082 in the aforementioned process (1), and stores the message in the message sending buffer 204 of Figure 2. Specifically, the output data of the application program AP is set in area 304 of the message in the output data buffer 2082 having the data set in the Data part 304. The two partial content codes are individually set in the first area 6031 and the second area 6032. The settings of other parts 301, 302, 304 are similar to those described with respect to Figure 4. Then the message is set in message sending buffer 204.
(3) The content of the message sending buffer 204 is sent out to the bus network 1 via the LAN adapter 21-26.

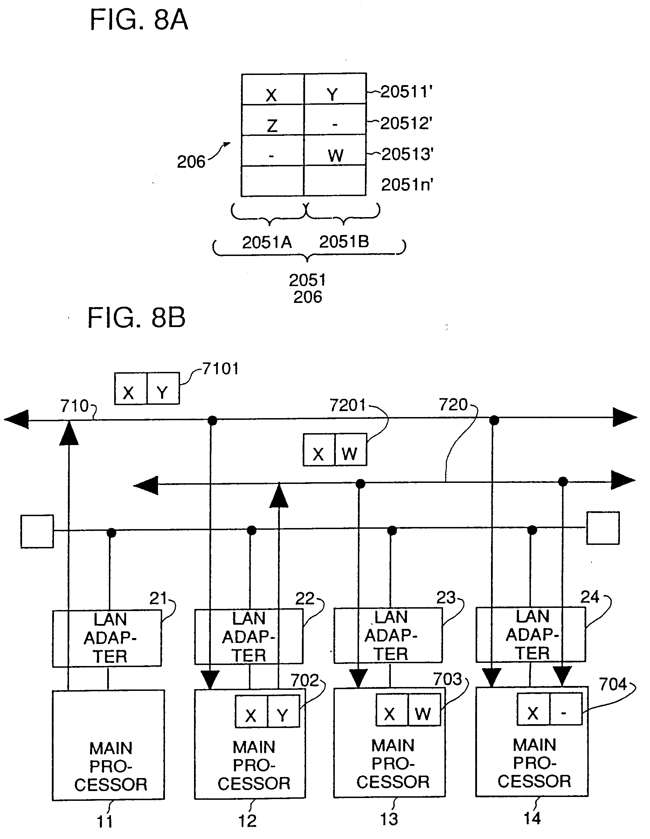

By the sending process 2022 thus far described, all the messages broadcast in the bus network (i.e., specific ones having a DA set to broadcast mode) are received by the LAN adapters 21-26, and each processor 11-16 judges whether to receive the broadcast message in the input data buffer 2081 according to the flowchart shown in Figure 5A. The receiving process 2021 relating to Figure 6 is different in the process of judging the content code, step 501, of Figure 5A. The method step 501 for judging the content code for Figure 6 will be described in the following with reference to Figures 8A and 8B.

Figure 8A shows a structure 2051 of the content code table 206 of Figure 2 for the ungrouped system of Figure 6. Figure 8B shows the flow of specific messages in a portion of Figure 6. In the content code table structure 2051, as shown in Figure 8A, individual lines 20511', 20512', 20513', 2051n', are registered with the content codes of the messages to be received by their self-processors 11-16. Moreover, each of these lines 20511' etc. is composed of a first area 2051A and a second area 2051B, which are individually registered with the partial content codes corresponding to areas 6031, 6032 of a message.

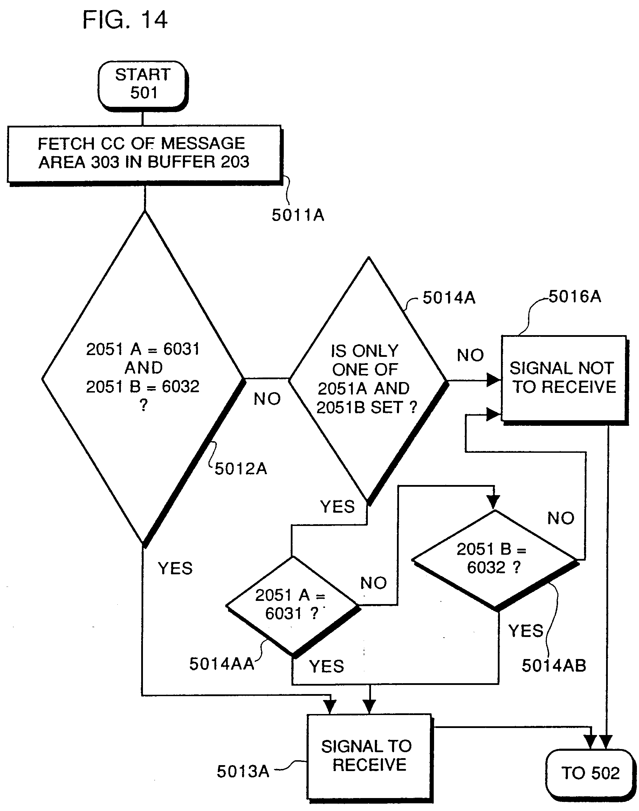

The process of judging the content code based on the table of Figure 8A will be described in the following with reference to Figure 14, for each line 2051:
(1) In case both the first and second areas 2051A and 2051B are set with the partial content codes, e.g., as in line 20511': The message in message receiving buffer 203 is fetched in step 5011A. If in step 5012A the contents of both the first and second areas 6031 and 6032 of the received message CC part 303 and the contents (e.g. X and Y) of both the first and second areas 2051A and 2051B of the content code table 206 are identical then in step 5013A a signal to receive is passed from step 5013A to step 502. Otherwise, flow is to step 5014A and if both areas 2051A and 2051B are set, the message is not received by generating a signal in step 5016A and passing to step 502.
(2) In case only the first area 2051A is set with the partial content code (e.g., as in line 20512' of Figure 8A): The message in receiving buffer 203 is fetched in step 5011A and flow is to step 5014A. If the content of the first area 6031 of the received message CC part 303 and the content of the first area 2051A of the content code table 2051 are identical for a line, such as 20512', then step 5014A passes flow to step 5013A to generate the signal to receive and flow proceeds to step 502. If the content of the second area 6032 equals the content of area 2051B as judged in step 5014B then step 5013A generates the signal to receive and flow passes to step 502. Otherwise, the message is not received by passing to step 5016A. In other words, whatever the second area 6032 content of the received message CC part might be, all the messages having first area 6031 identical to first area content 2051A are fetched from message received buffer 203 and passed to input data buffer 2081; and
(3) In case only the second area 2051B is set with the partial content code (e.g., as in line 20513'), the message is fetched and is passed to input data buffer 2081 if the second area 6032 content of the received message CC part 303 and the second area 2051B content of the content code table 206 are identical according to step 5014AB. Otherwise, the message is not received. In other words, whatever the first area content of the received message CC part might be, all the messages having area 6032 identical to second area 2051B content are fetched and passed to input data buffer 2081. The process of Figure 14 is repeated for each line of the table.

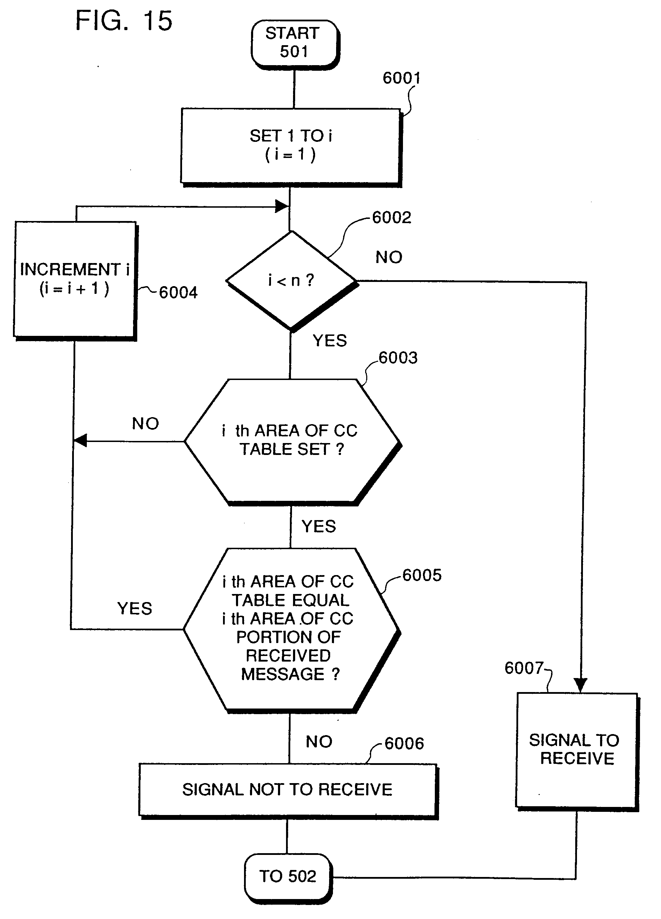

Figure 15 is a flowchart for the process of step 501, as an alternative to the process of Figure 14. In step 6001, the CC part 303 of the message in buffer 203 is fetched and a variable i is set to 1. In step 6002, if i is equal to or less than n, which is the number of areas in the CC part 303, processing proceeds to step 6003; otherwise, processing proceeds to step 6007 for generation of a signal to receive prior to passing flow to step 502. If the i th area of the current line of the CC table is set, processing proceeds to step 6005, otherwise processing proceeds to step 6004. In step 6004, i is incremented and processing returns to step 6002. In step 6005, if the i th area of the current line of the CC table equals the i th area of the CC part 303 of the received message, processing proceeds to step 6004, otherwise processing proceeds to step 6006. In step 6006, a signal is generated not to receive the message and processing passes to step 502.

According to the invention thus far described, the process of judging whether to receive the message on the basis of the content code can be accomplished by using less than the whole content code CC 303 (in the prior art the whole CC is always used). In the present invention an arbitrary part (arbitrary with respect to the sender) of the content code is judged so that the message can be selected more flexibly, in less time and with less overhead to increase efficiency.

An example of the message selection accomplished by the present invention will be described in the following with reference to Figure 8B. Figure 8B presents the same system structure as that of Figure 6, but shows message and table examples.

Here, the processors 11 to 13 perform a series of processes on data having a content X according to their AP's respectively. The processor 11 sends out a message 710 relating to an item Y of data having a content X. The processor 12 fetches the message 710 and produces and sends out a message 720 relating to an item W of data having the content X to the network.

In order to achieve a series of the aforementioned processes, the message 710 is set with a content code 7101 (having the first area 6031 set to X and the second area 6032 set to Y), and the message 720 is set with a content code 7201 (having the first area 6031 set to X and the second area 6032 set to W). The processor 12 has its content code table 206 with a portion 702 set with a content code CC (having the first area 2051A set to X and the second area 2051B set to Y) so that the processor 12 will receive the message 710 in its input data buffer 2081. The processor 13 has its content code table 206 set with a portion 703 set with a content code CC (having the first area 2051A set to X and the second area 2051B set to W) so that the second processor 13 will receive message 720 in its input data buffer 2081.

By registering the content code CC (having the first area 2051A set to X and an unset second area 2051B) in a content code table portion 704 of the processor 14, for example, all the messages (710 and 720) produced by processing the data of the content X in the processors 11 to 13 can be fetched easily and stored in the input data buffer 2081 of processor 14.

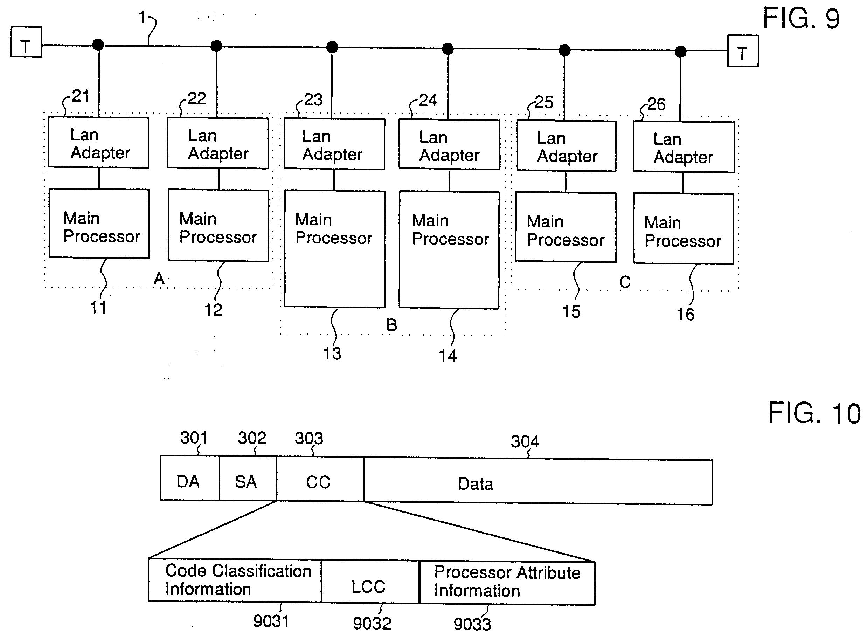

Next, the present invention will be described with reference to Figures 9 to 11.

Fig. 9 is a diagram showing a whole structure of the system for illustrating a third feature of the preferred embodiment. In Figure 9, processors 11-16 are capable of storing an application program AP in their internal memories and executing it, and bus type network 1 connects those processors. Control processors, i.e. "LAN adapters" 21-26 are for controlling the message transmissions with the network. The processors 11-16 transmit the messages within the network via the LAN adapters 21-26.

The system according to Figure 9 has multiple kinds of processors 11-16. In Figure 9, multiple kinds of processors 11-16 coexist on a-common LAN 1 such that the processors 11 and 12 belong to a processor kind/type A, the processors 13 and 14 belong to a processor kind B, and the processors 15 and 16 belong to a processor kind C. Each processor is registered with a processor kind code in area 207 indicating its own kind. Processors of different kinds differ, e.g. in operating systems, so that their message syntax, etc. are incompatible, that is a message written and sent by one kind of processor can not be read and used by another kind of processor without some form of conversion or translation.

Each processor 11-16 of Figure 9 has the same structure as that shown in Fig. 2. However, what is set in memory area 207 is not the self-group ID specific to the processor but the processor kind, i.e., one of A, B, C.

Figure 10 shows a format of a message flowing on the network shown in Figure 9. Here, the contents of the DA part 301, the SA part 302 and the Data part 304 are identical to those shown in Figure 3. A CC part 303 sets a code, CC, indicating the content of the data stored in the Data part 304, as in the CC part 303 of Figures 3 or 7 but the code of Figure 10 has three areas. In Figure 10, the CC part 303 is composed of a code classification information first area 9031, an LCC second area 9032 and a processor attribute information third area 9033.

The code classification information first area 9031, LCC second area 9032 and processor attribute information third area 9033 have their contents set when the messages are sent out from the individual processors 11-16. Specifically, the code classification information first area 9031 is set with the self-processor code from memory area 207 of Figure 2 (for example an identification of the operating system), and the LCC second area 9032 is set with the content code set in the output data buffer (i.e., 2082 of Fig. 2) by the application program. The processor attribute information third area 9033 is an area for storing information relating to an attribute of the sender processor, in case only the information in the other areas is insufficient, which also may come from memory area 207. For example, this area 9033 is set with the file format or the like (e.g. TIFF) of the AP file in which the data in the Data part 304 has been stored by the AP.

The value corresponding to the LCC area 9032 is registered in the content code table (206 of Fig. 2) of each processor.

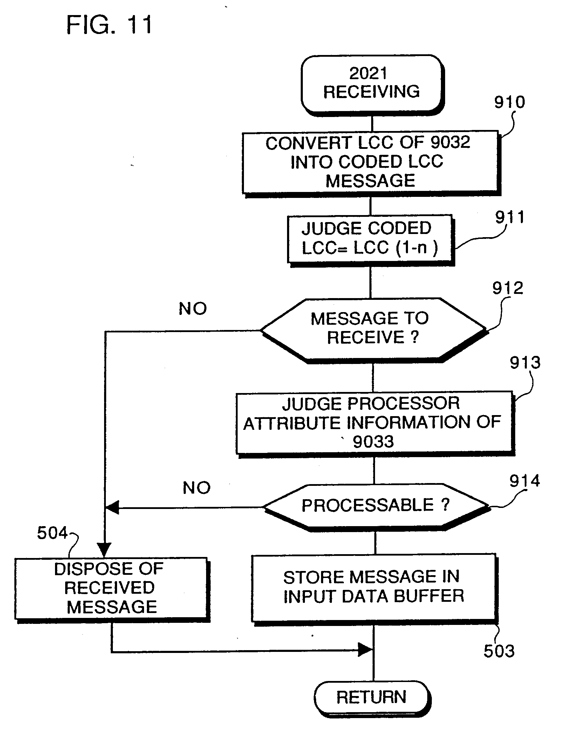

The message is broadcast on the network 1 so that it is received by each processor 11-16. The process of Fig. 5 is used as the receiving process 2021 and the process step 501 of judging the content code at the receiving time of each processor 11-16 for Figures 9 and 10 will be described with reference to Fig. 11, which is similar to Figure 5.

Fig. 11 is a flow chart showing the receiving process 2021 in Fig. 2 of the present invention. Each processor 11-16 having received the message shown in Figure 10 via the LAN adapter 21-26 in the message received buffer 203 judges whether to receive the message in input data buffer 2081 on the basis of the content of the CC part 303 of the received message and the processor's content code table 206. First of all, the content of the LCC part 9032 is converted at Step 910 into a code, which can be decoded by the receiving self-processor 11-16, on the basis of the code classification information 9031 in the CC part 303 of the message in message receiving buffer 203. This is intended to correspond to the case in which code systems are different among multiple kinds of processors. Incidentally, the conversion table (not shown) necessary for this conversion is set in memory in advance in each processor and converts a network code system into the receiving processor code system and vice versa for sending.

Next, it is judged (at step 911) whether the content of the LCC area of the conversion result is registered as LCCl - LCCn in the content code sub table 2052 of the self-processor. If NOT, there is generated a signal not to receive and control is passed to Step 912, and the receiving process is ended by disposing of the message in step 504 according to the judging of the content code not to receive (that is, steps 910-912 are more detailed than steps 501-502). If YES, on the contrary in Step 912, the content of the processor attribute information part 9033 in the received message CC part 303 is judged at Step 913.

Here, in Step 913, it is judged whether or not the content registered in the processor attribute information area 9033 can be processed by the self-processor. For example, it is decided whether or not the file format registered in the processor attribute information part 9033 is supported by the self-processor generating system. If judged NOT at Step 914, the receiving process is ended by disposing of the messages in Step 504 according to the content code not to receive the message. If judged YES at Step 914 in the self-processor, the process is ended by storing the message in the input data buffer 2081 according to the judging of the content code CC to receive the message at Step 503.

Even in the case of multiple kinds of processors coexisting in the system, each processor can send out a message to the network without knowing what kind of processor the message is to be sent out to, but knowing only its own kind. Moreover, each processor can judge the content code of a message on the network, even if it receives the message produced by another processor of another kind, so that the selective receiving process for the input data buffer 2081 can be effected among multiple kinds of processors.

Moreover, whether or not the message received from another processor can be processed by the support function of the self-processor can be judged at the receiving side of the network, so that unprocessible data can be prevented from being transferred to the input data buffer of the application program. In short, the content code message transmission can be accomplished among multiple kinds of processors according to the present invention.

The foregoing embodiment has been directed to multiple kinds of processors. The present invention can be applied to the following cases:
(1) In case the operating systems are different among a common kind of processor 11-16 on the network,
   this situation can be solved by setting the message with an operating system attribute in processor attribute area 9033 indicating the attribute of the OS; and
(2) In case of multiple kinds of processors and multiple operating systems,
   this situation can be solved by setting the message with the processor attribute information part 9033 with the processor attribute and the operating system attribute information.

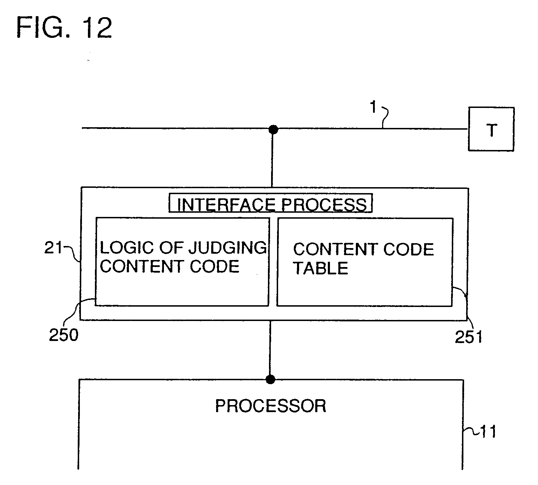

Figure 12 is a diagram showing a structure of LAN adapter 21 of Figs. 1, 6, 7, 8B and 9 according to the present invention where part of the judging previously described for step 501 is conducted in the LAN adapter 21 and part is conducted in the processor 11. The remaining LAN adapter structures are also identical. LAN adapter 21 is set with an interface process with the network 1 and also a process or logic of judging the content code 250 and a content code table 251 necessary for the judging process 250. The process 250 of judging the content code in the LAN adapter will be described in the following.

The basic concepts of the process 250 of judging the content code are, as follows:
(1) In the LAN adapter 21, an incomplete but quick process of judging the content code CC is accomplished to exclude most of the messages not to be received before reaching the self-processor 11; and
(2) At the processor 11 side, the accurate judging process, as defined, is accomplished to exclude the remaining messages not to be received, which could not be detected by judging in the LAN adapter 21.

In order to realize the aforementioned concept, one or more of the following processes of judging the content code CC, for example, is accomplished in the LAN adapter:
(1) The judging process is accomplished with a portion of the content code part to be judged. The logic of the LAN 21 is exemplified, as follows:
   (a) Registration in Content Code Table: A portion of the content code CC necessary for the self-processor, e.g., a leading two bytes are registered in the content code table 251 of the LAN adapter 21; and
   (b) Process of Judging Content Code:
      The logic 250 of the LAN adapter judges whether or not the leading two bytes in the CC part 303 of the message received from the network are registered in the content code table 251, and sends the received message to the self-processor only if it is registered.
(2) Judging whether to receive is accomplished by converting the content code to be judged. The logic is exemplified, as follows:
   (a) Registration in Content Code Table:
      A conversion formula for converting the value of the content code into the address of a LAN adapter content code table area is defined and is set in advance in each LAN adapter 21-26. Each LAN adapter 21-26 converts the content code CC for registering in itself into the address of the content code table area by the present conversion formula and sets that address area to "1". It is assumed that the content code table area has been cleared to "0" at the time of starting the LAN adapter; and
   (b) Logic for Judging Content Code:
      The LAN adapter 21-26 converts the CC part of the message received from the network into the address of the content code table area by the aforementioned conversion formula, and sends the received message to the self-processor 11-16 if that area is set with "1". In other cases, the LAN adapter disposes of some of the not to be received messages.
(3) The present logic is a combination of the first and second judging logics. The content code part to be judged is partially converted so that it may be judged whether to be received. The present logic is exemplified in the following:
   (a) Registration in Content Code Table:
      A conversion formula for converting a portion of the content code value, e.g. leading two bytes into the address of the LAN adapter content code table area is defined and is set in advance in each LAN adapter. In each LAN adapter, the leading two bytes of the content code to be registered in itself is converted into the address of the content code table area by the present conversion formula, and the access area is set with "1". The content code table area is cleared to "0" at the time of starting the LAN adapter; and
   (b) Content Code Decision:
      In the LAN adapter, the leading two bytes in the CC part of the message received from the network is converted into the address of the content code table area by the aforementioned conversion formula. If that area is set with "1", the received message is sent to the self-processor. In other cases, the received message is disposed of.

Accordingly, a quick process of judging the content code can be accomplished in the LAN adapter 21-26, although inaccurately, so that most of the messages not to be received in the input data buffers 2081 can be excluded without using the receiving processor 11-16. Thus, the number of accurate judgings of the content code CC in each processor 11-16 can be reduced to lighten the load for the receiving process 2021 at each processor 11-16.

The prior art accurate process of judging the content code CC with only the LAN adapter is accompanied by the problem that the load upon the LAN adapters is excessive, but this problem can be solved according to the present invention. Moreover, accurately judging the content code CC with only the processor by the prior art is accompanied by a problem that the load upon the processors is excessive, but this problem can also be solved according to the present invention.

A bus type network has been used, but the present invention should not be limited to the bus type network and can also be in a network of an arbitrary type, such as a ring or star or matrix or crossbar type. Moreover, the destination address (DA) of the message on the network is used to designate the broadcast mode, but the present invention can also be realized even if a group address or a one to one, i.e. specific address is used as the DA.

As has been described in detail, according to the present invention, the content codes CC can be grouped to avoid overlapping among the groups and can be set easily even if they are set independently in individual groups by the application AP. According to the present invention, moreover, the process step 501 of judging whether to receive the message on the basis of the content codes can be accomplished by not using all the content codes CC, as in the prior art, but rather only using a portion, e.g. an arbitrary portion of the content codes CC. Thus, the present invention can achieve a prominent effect that the selection of the message to be received can be accomplished more flexibly and efficiently.

According to the present invention, the content code message communication can be accomplished among multiple kinds of processors 11-16 even if the multiple kinds of processors 11-16 coexist in the network.

According to the present invention, a quick process of partially or pre-judging the content code can be accomplished in the control processor LAN adapters 21-26 to exclude most of the messages not to be received in the input data buffer 2082, thereby to lighten the load for the receiving process 2021 at the individual main processors 11-16. Thus, there can be attained another prominent effect that an efficient process of judging the content code CC can be realized.

While a preferred embodiment has been set forth along with modifications and variations to show specific advantageous details of the present invention, further embodiments, modifications and variations are contemplated within the broader aspects of the present invention as set forth by the spirit and scope of the appended claims.

## Claims

1. A system comprising a plurality of processors (11...16, 21...26) connected over a network (1), in which a message flowing on the network (1) has a content code (303) to indicate the content of the message and each processor (11...16, 21...26) judges whether to receive the message on the basis of the content code (303), characterized in
that each processor (11...16, 21...26) has means (21...26, 2021) for prejudging not to receive a message on the basis of only an area (3031; 6031; 6032; 9032) of the content code to quickly and efficiently select some of the messages not to be received; and
that post judging means (21...26, 2021) are provided for judging whether to receive or not receive the remaining messages based upon the remainder (3032; 6032; 6031; 9033) of the content code (303).

2. A system as set forth in claim 1, characterized in that the content code (303) of a message is divided into a plurality of areas (3031, 3032; 6031, 6032; 9031, 9032,9033), and that each of said processors (11...16, 21...26) has a logic means (2021, 21...26) for judging each of said divided areas so that the judgment whether to receive a message is decided on the basis of said logic means (2021, 21...26).

3. A system as set forth in claim 1 or 2, characterized in that the content code (303) of a message is divided into a plurality of areas (3031, 3032; 6031, 6032; 9031, 9032, 9033); and that each of said processors (11...16, 21...26) judges whether to receive or not a message for each of said divided areas in accordance with a predetermined sequence (2021).

4. A system as set forth in any of claims 1 to 3, characterized in that each processor (11...16, 21...26) sends a message on the network with sender information (3031, 9031, 9033) concerning a sender of the message as a part of said content code (303); and each processor (11...16, 21...26) judges whether to receive or not said message on the basis of the sender information (3031, 9031, 9033).

5. A system as set forth in claim 4, characterized in that said sender information (3031, 9033) contains at least information on the sender processor.

6. A system as set forth in any of claims 1 to 5, characterized in that each processor (11...16, 21...26) sends a message on the network with sender code classification information (9031) of the content code (303); and
each processor (11...16, 21...26) converts the content code (303) of a message prejudged to be received into a new code on the basis of said code classification information (9031).

7. A system as set forth in any of claims 1 to 6, characterized in that each of said processors includes a main processor (11...16) and a network adapter processor (21...26) for transmission control of sending/receiving between said network (1) and said main processor (11...16);
said network adapter processor (21...26) having said means judging whether to receive or not and said main processor (11...16) having said post judging means (2021).
